# EUROPEAN PATENT APPLICATION

(11) **EP 4 132 152 A1**
(43) Date of publication of application: **08.02.2023**
(21) Application number: 20928285.4
(22) Date of filing: 31.03.2020
(51) Int. Cl.: H04W 72/04

(54) **TERMINAL**

(71) Applicant: NTT DOCOMO, INC., Chiyoda-Ku Tokyo 100-6150 (JP)
(72) Inventor: TAKAHASHI Yuki, Tokyo 100-6150 (JP); HARADA Hiroki, Tokyo 100-6150 (JP); NAGATA Satoshi, Tokyo 100-6150 (JP)
(74) Representative: Hoffmann Eitle
(86) International application number: PCT/JP2020/014943
(87) International publication number: WO 2021/199348

(57) **Abstract**

A terminal receives a downlink control channel from a network and then transmits an uplink data channel to a network based on a preparation time. The terminal assumes a longer preparation time in a case of different frequency bands different from a frequency band including one or a plurality of frequency ranges than a preparation time in a case of the frequency band.

## Description

### Technical Field

The present disclosure relates to a terminal that executes radio communication, and more particularly, to a terminal that executes radio communication using a plurality of component carriers.

### Background Art

The 3rd generation partnership project (3GPP) is progressing specification of 5th generation mobile communication system (hereinafter, 5G, referred to as new radio (NR) or next generation (NG)) and furthermore specification of next generation referred to as Beyond 5G, 5G Evolution, or 6G.

Release 15 and Release 16 (NR) of 3GPP specify an operation in a plurality of frequency ranges, specifically, a band including FR1 (410 MHz to 7.125 GHz) and FR2 (24.25 GHz to 52.6 GHz).

Further, NR that supports up to 71 GHz exceeding 52.6 GHz is also being studied (Non Patent Literature 1). Furthermore, Beyond 5G, 5G Evolution, or 6G (after Release-18) aims to support a frequency band exceeding 71 GHz.

### Citation List

### Non Patent Literature

Non Patent Literature 1: "New WID on Extending current NR operation to 71 GHz", RP-193229, 3GPP TSG RAN Meeting #86, 3GPP, December, 2019

### Summary of Invention

When different frequency bands, such as a high frequency band exceeding 52.6 GHz as described above, different from FR1/FR2 are used, a wider subcarrier spacing (SCS) is assumed.

In consideration of such a situation, a preparation time of PUSCH which is a timeline of a downlink control channel (physical downlink control channel (PDCCH)) and an uplink data channel (physical uplink shared channel (PUSCH)) may not necessarily be appropriate.

Therefore, the following disclosure is made in view of such a situation, and an object of the present disclosure is to provide a terminal capable of assuming an appropriate preparation time of an uplink data channel (PUSCH) even when using different frequency bands such as a high frequency band exceeding 52.6 GHz.

According to an aspect of the present disclosure, a terminal (UE 200) includes a receiving unit (radio signal transmitting and receiving unit 210) that receives a control resource set including a first area and a second area from a network, and a control unit (control unit 270) that assumes division transmission in which the first area is transmitted via a first component carrier and the second area is transmitted via a second component carrier.

According to an aspect of the present disclosure, a terminal (UE 200) includes a receiving unit (radio signal transmitting and receiving unit 210) that receives a downlink control channel from a network, a transmitting unit (radio signal transmitting and receiving unit 210) that receives the downlink control channel and then transmits an uplink data channel to the network based on a preparation time, and a control unit (control unit 270) that assumes a longer preparation time in a case of different frequency bands different from a frequency band including one or a plurality of frequency ranges than a preparation time in a case of the frequency band.

### Brief Description of Drawings

Fig. 1 is an overall schematic configuration diagram of a radio communication system 10.
Fig. 2 is a diagram illustrating a frequency range used in the radio communication system 10.
Fig. 3 is a diagram illustrating a configuration example of radio frames, subframes, and slots used in the radio communication system 10.
Fig. 4 is the functional block configuration diagram of the UE 200.
Fig. 5 is a diagram illustrating an example of a communication sequence regarding CORESET.
Fig. 6 is a diagram illustrating an allocation example of CORESET to a frequency domain and a time domain according to operation example 1-1.
Fig. 7 is a diagram illustrating an allocation example of CORESET to a frequency domain and a time domain according to operation example 1-2.
Fig. 8 is a diagram illustrating an allocation example (1) of the CORESET to the frequency domain and the time domain according to the operation example 1-3.
Fig. 9 is a diagram illustrating an allocation example (2) of the CORESET to the frequency domain and the time domain according to the operation example 1-3.
Fig. 10 is a diagram illustrating an example of a hardware configuration of the UE 200.

### Description of Embodiments

Hereinafter, embodiments will be described with reference to the drawings. Note that the same functions or configurations will be denoted by the same or similar reference numerals, and a description thereof will be appropriately omitted.

### (1) Overall Schematic Configuration of Radio Communication System

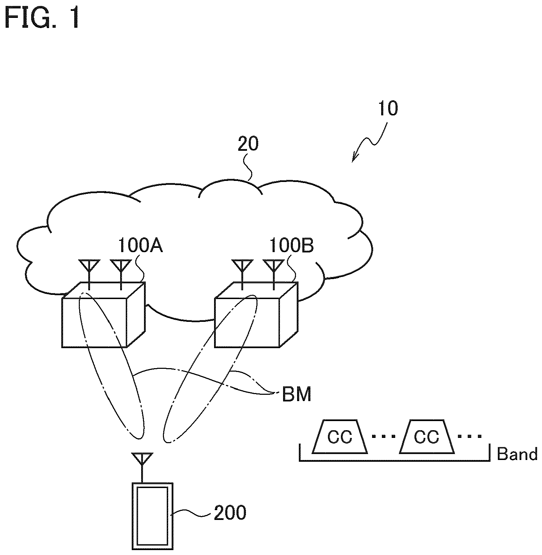

Fig. 1 is an overall schematic configuration diagram of a radio communication system 10 according to the present embodiment. The radio communication system 10 is a radio communication system according to 5G new radio (NR), and includes a next generation-radio access network 20 (hereinafter, referred to as NG-RAN 20) and a user terminal 200 (hereinafter, referred to as UE 200, User Equipment).

Note that the radio communication system 10 may be a radio communication system according to a method referred to as Beyond 5G, 5G Evolution, or 6G.

The 20 includes a radio base station 100A (hereinafter, referred to as a gNB 100A) and a radio base station 100B (hereinafter, referred to as a gNB 100B). Note that a specific configuration of the radio communication system 10 that includes the number of gNBs and UEs is not limited to the example illustrated in Fig. 1.

The NG-RAN 20 actually includes a plurality of NG-RAN nodes, specifically, gNBs (or ng-eNBs), and is connected to a 5G core network (5GC) (not illustrated). Note that the 20 and the 5GC may be simply expressed as "network".

The gNB 100A and the gNB 100B are 5G radio base stations, and execute 5G radio communication with the UE 200. The gNB 100A, the gNB 100B, and the UE 200 can support massive multiple-input multiple-output (MIMO) that generates a beam (BM) with higher directivity, carrier aggregation (CA) that bundles and uses a plurality of component carriers (CCs), dual connectivity (DC) that simultaneously performs communication between the UE and each of two NG-RAN nodes, and the like, by controlling radio signals transmitted from a plurality of antenna elements.

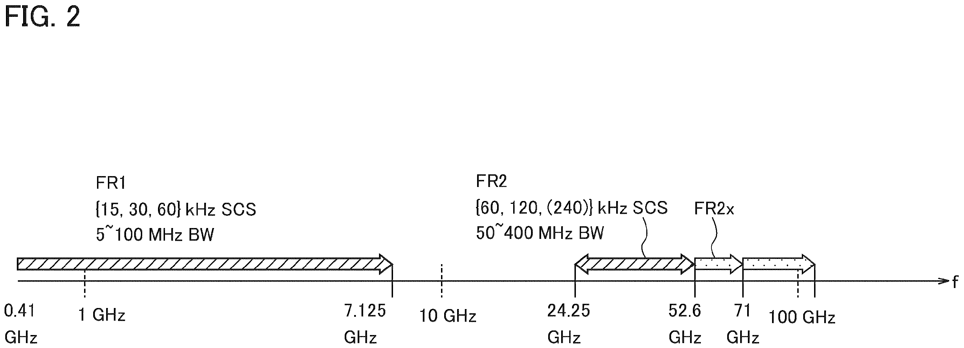

In addition, the radio communication system 10 supports a plurality of frequency ranges (FRs). Fig. 2 illustrates a frequency range used in the radio communication system 10.

As illustrated in Fig. 2, the radio communication system 10 corresponds to FR1 and FR2. Frequency bands of each FR are as follows.

- FR1: 410 MHz to 7.125 GHz
- FR2: 24.25 GHz to 52.6 GHz

In the FR1, sub-carrier spacing (SCS) of 15, 30, or 60 kHz may be used and a bandwidth (BW) of 5 to 100 MHz may be used. The FR2 has a frequency higher than that of the FR1, the SCS of 60 or 120 kHz (240 kHz may be included) may be used, and a bandwidth (BW) of 50 to 400 MHz may be used.

Note that the SCS may be interpreted as numerology. The numerology is defined in 3GPP TS38.300 and corresponds to one subcarrier spacing in a frequency domain.

Further, the radio communication system 10 supports a frequency band higher than that of the FR2. Specifically, the radio communication system 10 supports a frequency band exceeding 52.6 GHz and up to 71GHz. Such a high frequency band may be referred to as "FR2x" for convenience.

In order to solve such a problem, when using a band exceeding 52.6 GHz, cyclic prefix-orthogonal frequency division multiplexing (CP-OFDM)/discrete Fourier transform-spread (DFT-S-OFDM) having a larger sub-carrier spacing (SCS) may be applied.

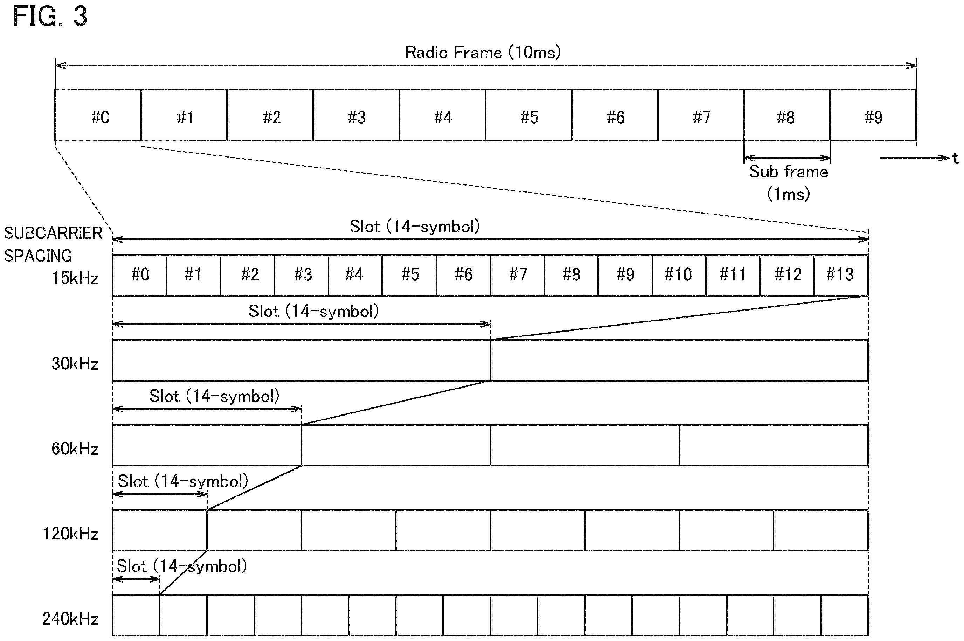

Fig. 3 illustrates a configuration example of radio frames, subframes, and slots used in the radio communication system 10.

As illustrated in Fig. 3, the configuration of 1 slot is composed of 14 symbols, and the larger (wider) the SCS is, the shorter the symbol period (and the slot period) is. The SCS is not limited to the interval (frequency) illustrated in Fig. 3. For example, 480 kHz, 960 kHz, or the like may be used.

Further, the number of symbols forming one slot may not necessarily be 14 symbols (for example, 28 and 56 symbols). Further, the number of slots per subframe may vary depending on the SCS.

Note that a time direction (t) illustrated in Fig. 3 may be referred to as a time domain, a symbol period, a symbol time, or the like. Further, a frequency direction may be referred to as a frequency domain, a resource block, a subcarrier, a bandwidth part (BWP), or the like.

The BWP may be interpreted as a contiguous set of physical resource blocks (PRBs) selected from a contiguous subset of common resource blocks for given numerology on a given carrier.

The BWP information (bandwidth, frequency position, subcarrier spacing (SCS)) that the UE 200 should use for radio communication can be configured in the UE 200 by using signaling of an upper layer (for example, radio resource control layer (RRC)). A different BWP may be configured for each UE 200 (terminal). The BWP may be changed by the upper layer signaling or lower layer signaling, specifically, physical layer (L1) signaling (such as downlink control information (DCI) or the like described later).

In the radio communication system 10, a plurality of CCs for CA may be supported to achieve higher throughput. For example, when a maximum bandwidth of the CC is 400 MHz, up to 32 CCs can be arranged in FR2x, specifically, a frequency band of 57 GHz to 71 GHz. Note that the set maximum number of CCs may exceed 32 or may be equal to or less than 32.

Further, the DCI may include the following information.
(i) Uplink (UL) resource allocation (permanent or nonpermanent)
(ii) Description of downlink (DL) data transmitted to UE200

The DCI may be a set of information capable of scheduling a downlink data channel (for example, physical downlink shared channel (PDSCH)) or an uplink data channel (for example, physical uplink shared channel (PUSCH)). Such DCI may in particular be referred to as scheduling DCI.

The DCI can be transmitted by a downlink control channel, specifically, a physical downlink control channel (PDCCH). Further, a DL radio resource used for PDCCH transmission can be designated by a control resource set (control resource sets (CORESET)). That is, the CORESET may be interpreted as a set of physical resources (specifically, a specific area on a DL resource grid) and parameters used for transmitting PDCCH (including DCI).

The UE 200 can assume the specific area to which the CORESET is allocated based on a timing and cycle pointed to by a search space, specifically, a common search space (CSS).

Further, the CORESET may include the following parameters.
· Resource element (RE): The smallest unit of the resource grid that is composed of one subcarrier in the frequency domain and one OFDM symbol in the time domain
· Resource element group (REG): Be composed of one resource block (12 resource elements in the frequency domain) and one OFDM symbol in the time domain
· REG bundle: Be composed of a plurality of REGs. The bundle size can be designated by a parameter 'L', in which L can be determined by a radio resource control layer (RRC) parameter (reg-bundle-size).
· Control channel element (CCE): Be composed of a plurality of REGs. The number of REGs (REG bundles) included in the CCE may vary.
· Aggregation level (AL): Indicate the number of CCEs allocated to the PDCCH. In 3GPP Release-15 and 16, 1, 2, 4, 8, and 16 are defined, but in the radio communication system 10, a larger value may be used as described later.

In addition, in 3GPP Release-15 and 16, a PUSCH preparation time indicating a timeline of a PDCCH including a scheduling DCI and a PUSCH scheduled by the scheduling DCI is defined. In the radio communication system 10, as will be described later, a larger value may be used as the preparation time.

### (2) Functional Block Configuration of Radio Communication System

Next, the functional block configuration of the radio communication system 10 will be described. Specifically, a functional block configuration of the UE 200 will be described.

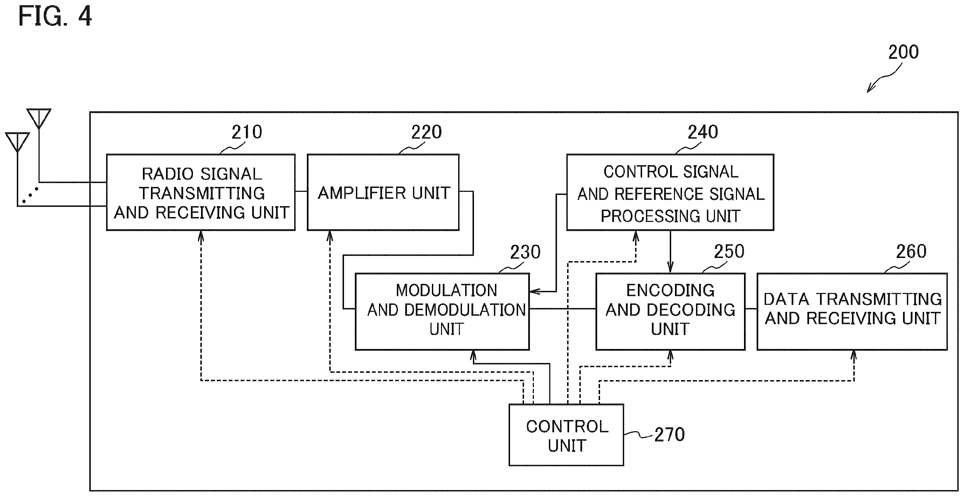

Fig. 4 is the functional block configuration diagram of the UE 200. As illustrated in Fig. 4, the UE 200 includes a radio signal transmitting and receiving unit 210, an amplifier unit 220, a modulation and demodulation unit 230, a control signal and reference signal processing unit 240, an encoding/decoding unit 250, a data transmitting and receiving unit 260, and a control unit 270.

The radio signal transmitting and receiving unit 210 transmits and receives a radio signal according to NR. The radio signal transmitting and receiving unit 210 corresponds to Massive MIMO, CA used by bundling a plurality of CCs, DC performing simultaneous communication between the UE and each of the two NG-RAN nodes, and the like.

In the present embodiment, the radio signal transmitting and receiving unit 210 receives the downlink control channel from the network (gNB100A or gNB100B, the same hereinafter). In the present embodiment, the radio signal transmitting and receiving unit 210 constitutes a receiving unit.

Specifically, the radio signal transmitting and receiving unit 210 receives the PDCCH. The PDCCH may be transmitted over a plurality of CCs, as will be described later.

The PDCCH is transmitted in the control resource set (CORESET) as described above. In the present embodiment, the CORESET may also be transmitted across a plurality of CCs, that is, by being divided into a plurality of CCs.

Specifically, the CORESET may be divided into at least two areas, specifically, a first area and a second area.

That is, the radio signal transmitting and receiving unit 210 can receive the CORESET including the first area and the second area from the network. Note that the CORESET may be divided into three or more areas and divided into two or more CCs for transmission.

In addition, the radio signal transmitting and receiving unit 210 receives a downlink data channel from the network. Specifically, the radio signal transmitting and receiving unit 210 receives the PDSCH.

In addition, the radio signal transmitting and receiving unit 210 transmits an uplink data channel from the network. Specifically, the radio signal transmitting and receiving unit 210 transmits the PUSCH. In the present embodiment, the radio signal transmitting and receiving unit 210 constitutes a transmitting unit.

In particular, the radio signal transmitting and receiving unit 210 can transmit the PUSCH based on the PUSCH preparation time indicating the timeline between the PDCCH and the PUSCH after receiving the PDCCH.

Specifically, the radio signal transmitting and receiving unit 210 can transmit the PUSCH within the time corresponding to the number of symbols defined by the PUSCH preparation time under the control of the control unit 270.

The amplifier unit 220 is configured by a power amplifier (PA)/low noise amplifier (LNA) or the like. The amplifier unit 220 amplifies a signal output from the modulation and demodulation unit 230 to a predetermined power level. Further, the amplifier unit 220 amplifies an RF signal output from the radio signal transmitting and receiving unit 210.

The modulation and demodulation unit 230 executes data modulation and demodulation, transmit power setting, resource block allocation, and the like for each predetermined communication destination (gNB 100A or the like). In the modulation and demodulation unit 230, cyclic prefix-orthogonal frequency division multiplexing (CP-OFDM)/discrete Fourier transform-spread (DFT-S-OFDM) may be applied. In addition, the DFT-S-OFDM may be used not only in the uplink (UL) but also in the downlink (DL).

The control signal and reference signal processing unit 240 executes processing regarding various control signals transmitted and received by the UE 200 and processing regarding various reference signals transmitted and received by the UE 200.

Specifically, the control signal and reference signal processing unit 240 receives various control signals transmitted from the gNB 100A via a predetermined control channel, for example, a control signal of a radio resource control layer (RRC). In addition, the control signal and reference signal processing unit 240 transmits various control signals to the gNB 100A via a predetermined control channel.

The control signal and reference signal processing unit 240 executes processing using a reference signal (RS) such as a demodulation reference signal (DMRS) and a phase tracking reference signal (PTRS).

Further, the DMRS is a known reference signal (pilot signal) between a base station for each terminal and a terminal for estimating a fading channel used for data demodulation. The PTRS is a reference signal for each terminal for the purpose of estimating phase noise which is a problem in a high frequency band.

In addition to the DMRS and the PTRS, the reference signal may also include a channel state informationreference signal (CSI-RS), a sounding reference signal (SRS), a positioning reference signal (PRS) for position information, and the like.

Further, the channel includes a control channel and a data channel. The control channel includes a physical downlink control channel (PDCCH), a physical uplink control channel (PUCCH), a random access channel (RACH, downlink control information (DCI) including random access radio network temporary identifier (RA-RNTI)), a physical broadcast channel (PBCH), and the like.

In addition, the data channel includes a physical downlink shared channel (PDSCH), a physical uplink shared channel (PUSCH), and the like. The data may mean data transmitted via the data channel. The data channel may be read as a shared channel.

The encoding/decoding unit 250 executes data division/concatenation and channel coding/decoding for each predetermined communication destination (gNB100A or the like).

Specifically, the encoding/decoding unit 250 divides data output from the data transmitting and receiving unit 260 into a predetermined size, and executes the channel coding on the divided data. Further, the encoding/decoding unit 250 decodes data output from the modulation and demodulation unit 230 and concatenates the decoded data.

The data transmitting and receiving unit 260 executes transmission and reception of a protocol data unit (PDU) and a service data unit (SDU). Specifically, the data transmitting and receiving unit 260 executes assembling and disassembling of the PDU/SDU and the like in a plurality of layers (such as medium access control layer (MAC), radio link control layer (RLC), packet data convergence protocol layer (PDCP), and the like). Further, the data transmitting and receiving unit 260 executes data error correction and retransmission control based on hybrid automatic repeat request (hybrid ARQ).

A control unit 270 controls each functional block constituting the UE 200. In particular, in the present embodiment, the control unit 270 executes control regarding the downlink control channel (PDCCH).

Specifically, the control unit 270 executes control regarding the control resource set (CORESET) to which the PDCCH is transmitted.

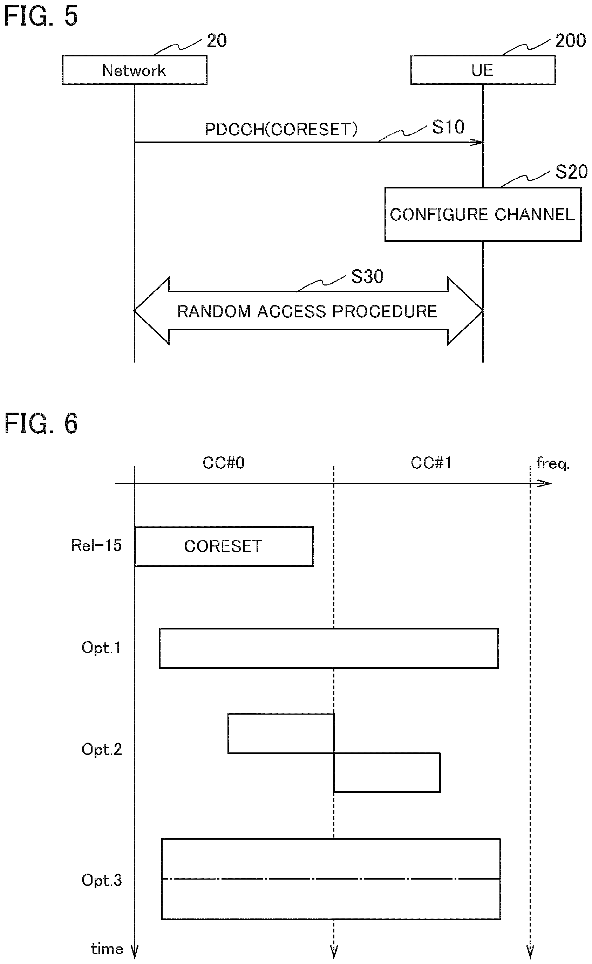

As described above, in the present embodiment, the CORESET can be transmitted across the plurality of CCs, and may be divided into at least two areas, specifically, the first area and the second area. The control unit 270 may assume that the first area is transmitted via a first component carrier (for example, CC #0, see Fig. 6 and the like) and the second area is transmitted via a second component carrier (for example, CC #1) (hereinafter, referred to as division transmission).

Note that as described above, the CORESET may be divided into three or more areas and divided into two or more (that is, three or more) CCs for transmission. The CC to which the CORESET is dividedly transmitted may be basically assumed to be contiguous, but may be non-contiguous.

Furthermore, the control unit 270 can assume that the first area and the second area of the CORESET are allocated to different positions in the time domain while being dividedly transmitted into the plurality of CCs. For example, the first area may be configured to be CC#0, and the second area may be configured to be CC#1 and may be allocated to the time domain, that is, different symbols (OFDM symbols). The first area and the second area may be contiguous or non-contiguous in the time domain (symbol).

Further, the control unit 270 may assume that the aggregation level (AL) of the control channel elements (CCE) constituting the CORESET is higher in the case of the division transmission of the CORESET than that in the case where the CORESET is not dividedly transmitted.

In the 3GPP Release-15 and 16, AL of 1, 2, 4, 8, and 16 can be set, but a larger value, for example, AL of 32, 64 may be set.

Further, the control unit 270 may assume that the number of resource element groups (REG) included in the CCE (which may be the number of REG bundles) is larger in the case of CORESET division transmission than that in the case where the CORESET is not dividedly transmitted.

In the 3GPP Release-15 and 16, the CCE can include up to 6 REG bundles, but may include a larger number, for example, 12 REG bundles. Further, when a high frequency band such as FR2x is used, the CCE may include a larger number of REGs, or may include a larger number of REGs as the size of BWP increases.

As described above, the control unit 270 may assume that the CORESET is dividedly transmitted, but in this case, the control unit 270 may assume that the CORESET or parameters of an upper layer related to a common search space (CSS) are applied to groups of the plurality of CCs used for the division transmission.

Specifically, in the 3GPP Release-15 and 16, the CORESET and the CSS can be configured for each DL BWP, but in the present embodiment, may be configured for each group of the plurality of CCs used for the division transmission of the CORESET.

Note that the upper layer parameters (RRC and the like) related to the CORESET and the CSS may be set not for each CC defined in the 3GPP Release-15 and 16, but may be set for each group of the plurality of CCs.

In the present embodiment, the control unit 270 may assume a longer PUSCH preparation time in the case of the high frequency band such as FR2x, that is, different frequency bands different from the frequency band including one or the plurality of frequency ranges (FR1 and FR2) than that in the case of the frequency band.

Specifically, the control unit 270 may make the longer PUSCH preparation time applied to the PUSCH scheduled by the scheduling DCI in the high frequency band than that in the case of the FR1 and the FR2.

Further, the control unit 270 may assume the longer PUSCH preparation time in the case where the subcarrier spacing (SCS) used for the transmission of the PUSCH is larger than the frequency band including the FR1 and the FR2 than that in the case of the frequency band. For example, the control unit 270 may lengthen the PUSCH preparation time in the case of a large SCS such as 240 kHz. Note that a specific configuration example of the PUSCH preparation time will be described later.

Furthermore, the control unit 270 may assume a longer PDSCH decoding time in the case of the different frequency bands than that in the case of the frequency band including the FR1 and the FR2.

Note that the PUSCH preparation time N2 and the PDSCH decoding time N1 are defined in 3GPP TS38.214.

### (3) Operation of Radio Communication System

Next, an operation of the radio communication system 10 will be described. Specifically, an operation related to the resource configuration of the downlink control channel (PDCCH) using the plurality of component carriers (CC) will be described.

### (3.1) Prerequisite

As described above, the radio communication system 10 supports the frequency band (FR2x) that exceeds 52.6 GHz and extends to 71 GHz. The high frequency band like the FR2x is essentially different from the FR1 and the FR2 in the following points.

### (Channel/Radio Wave Propagation)

· Expansion of available bandwidth (about 13 GHz (for 57 to 71 GHz unlicensed))
· Low delay spread due to large path loss by non-line of sight (NLOS)

### (Device (Terminal))

· Small size antenna element according to wavelength ((massive) antenna using the same)
· High directivity based on analog beamforming (narrow beam width)

- Lower efficiency of power amplifier (increase in peakto-average power ratio (PAPR))
- Increase in phase noise (applicability of higher SCS and shorter symbol time)

Also, the wider the available bandwidth, the more the CCs are likely to be set unless a very wide CC bandwidth is supported. As described above, when the maximum bandwidth of the CC is 400 MHz as in the FR2, up to 32 CCs can be arranged in a frequency band of 57 GHz to 71 GHz.

In the carrier aggregation (CA), the number of CCs that can be set is limited. Specifically, in the 3GPP Release-15 and 16, the maximum number of CCs that can be set for the UE 200 is 16 in DL and UL, respectively (chapter 5.4.1 in 3GPP 38.300).

On the other hand, the configuration of the physical layer (L1 and PHY) and the medium access control layer (MAC) is executed for each CC. In the 3GPP Release-15 and 16, one DCI can schedule only one CC, and therefore a plurality of DCIs are required to schedule a plurality of CCs. Therefore, the capacity of the PDCCH can be tight.

In addition, one transport block (TB) can be transmitted only by one CC (that is, one TB cannot be mapped to the plurality of CCs), and a plurality of CCs need to have a plurality of hybrid automatic repeat request (HARQ) acknowledgment (ACK) bits.

Further, beam management (transmission configuration indication (TCI) state display) is also executed for each CC. Specifically, in the 3GPP Release-16, one MAC-CE can update/activate the TCI states of a plurality of CCs, but one DCI can update only the TCI state of one CC.

Although there are such restrictions, it is assumed that the channel characteristics of the plurality of CCs within a single wide band do not differ so much, and therefore it is assumed that an operation in separate PHY and MAC layers for each CC is not always necessary and efficient.

In the following, in consideration of such a prerequisite, a more efficient operation related to the configuration of the CORESET when the plurality of component carriers (CC) are set will be described. Specifically, an operation capable of realizing highly flexible PDCCH scheduling (for example, transmission of one transport block (TB) via the plurality of CCs) via a plurality of CCs will be described.

### (3.2) Operation Overview

The following operation example will be described as an operation for realizing the highly flexible PDCCH scheduling via the plurality of CCs.
· (Operation Example 1): Configuration of CORESET for resource allocation such as PDCCH
· (Operation Example 2): New configuration of CORESET Increasing in the aggregation level (AL) of the control channel element (CCE) and coarsening the granularity of the CCE and REG bundles may be included.
· (Operation Example 3): Mutual cooperation between CORESET and search space
· (Operation Example 4): Change in PUSCH preparation time (and PDSCH decoding time)

Fig. 5 illustrates an example of a communication sequence regarding the CORESET. Here, it is assumed that the UE 200 sets a plurality of CCs to execute the CA.

As illustrated in Fig. 5, the network transmits PDCCH (CORESET) to the UE 200 (S10). Specifically, when it is determined that CORESET for Type0-PDCCH CSS (Common Search Space) set exists, the UE 200 determines several contiguous resource blocks (RBs) and symbols for the CORESET (which may be referred to as remaining minimum system information (RMSI) CORESET). The UE200 configures the downlink control channel (physical downlink control channel (PDCCH)), specifically, type 0 PDCCH monitoring occasion (MO) for system information block (SIB) decoding based on the determined RB and symbol.

The UE 200 configures a subsequently required data channel, specifically, PUSCH and PDSCH (S20).

The UE200 executes a random access (RA) procedure or the like using the configured channel or the like, and establishes a connection with the network (S30).

### (3.3) Operation Example 1

This operation example relates to the resource allocation of the CORESET. Specifically, in this operation example, the CORESET may be configured across the plurality of CCs.

### (3.3.1) Operation Example 1-1

Fig. 6 illustrates an allocation example of CORESET to a frequency domain and a time domain according to operation example 1-1. As illustrated in Fig. 6, the CORESET may be configured, that is, dividedly transmitted, across the plurality of CCs (CC#0 and CC#1). Note that the number of CCs set across one CORESET is not limited to 2, and may be 3 or more. In addition, the CC may be contiguous or non-contiguous in the frequency domain.

Further, as illustrated in Fig. 6, the following allocation options may be applied.
· (Option 1): The CORESET is allocated to the plurality of CCs only in the frequency domain.

In the case of the 3GPP Release-15 and the like, the CORESET is allocated within one CC (frequency domain), but in the case of the option 1, the CORESET is duplicately allocated to CC#0 and CC#1 in the same time domain (symbol or slot). As described above, the area of the CORESET allocated to the CC#0 may be called the first area, and the area of the CORESET allocated to the CC#1 may be called the second area.

Further, in this case, the parameters regarding the CORESET in the RRC layer, specifically, a bit size of frequencyDomainResources may be the number of CCs included in the group for the division transmission of the CORESET × 45.
· (Option 2): The CORESET is duplicately allocated to the plurality of CCs only in the time domain.

As illustrated in Fig. 6, the CORESET is duplicately allocated to the CC#0 and the CC#1, but is not duplicately allocated to the CC#0 and the CC#1 in the same time domain. That is, the CORESET can be duplicately allocated to the CC#0 and the CC#1 only in the time domain.

Note that the option 2 is not suitable when frequency division multiplexing (FDM) is not used.

Further, in this case, the parameter related to the CORESET in the RRC layer, specifically, the duration takes a value of 1..maxCoReSetDuration when being applied to each grouped CC, maxCoReSetDurationForGroup may be set as the maximum value of the number of CORESET durations. Alternatively, the duration may indicate the value of 1..maxCoReSetDuration for each CC.
· (Option 3): The CORESET is allocated to the plurality of CCs both in the frequency domain and the time domain.

As illustrated in Fig. 6, the CORESET is duplicately allocated to the CC#0 and the CC#1 within the same time domain, but is duplicately allocated to the CC#0 and the CC#1 in the same time domain.

Further, in this case, similar to the option 1, a bit size of frequencyDomainResources may be the number of CCs included in the group for the division transmission of the CORESET × 45, and the duration is 1..maxCoReSetDurationForGroup, that is, may be set as the group including the CC.

### (3.3.2) Operation Example 1-2

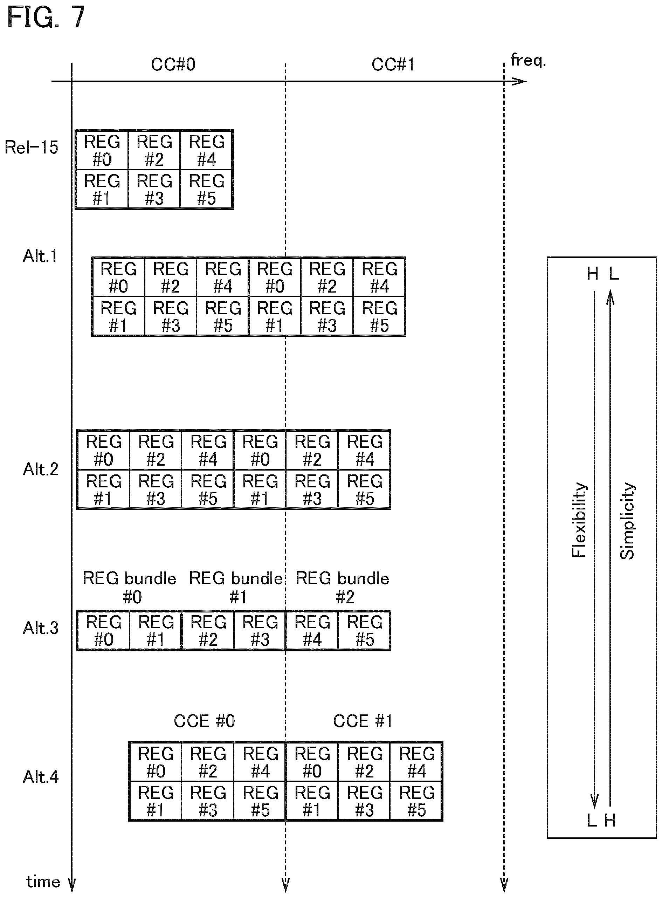

Fig. 7 illustrates an allocation example of CORESET to a frequency domain and a time domain according to operation example 1-2. As illustrated in Fig. 7, when the CORESET is duplicately allocated to the plurality of CCs, the UE 200 may assume the following duplication level.
· (Alt. 1): RE level
· (Alt. 2): REG level
· (Alt. 3): REG bundle level (suitable for interleave mapping)
· (Alt. 4): CCE level (suitable for PDCCH monitoring)

In addition, as illustrated in Fig. 7, regarding the allocation flexibility of the CORESET (RE), Alt. 1 is highest. On the other hand, regarding allocation simplicity of CORESET(RE), Alt. 4 is highest.

### (3.3.3) Operation Example 1-3

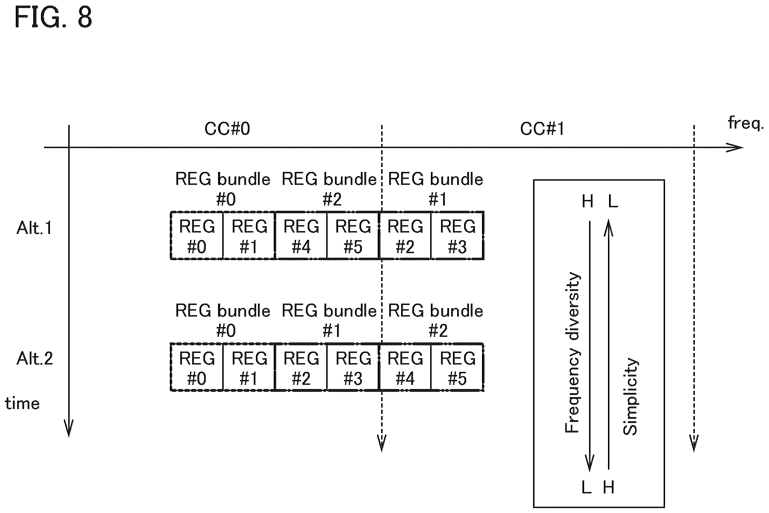

Fig. 8 illustrates an allocation example (1) of CORESET to a frequency domain and a time domain according to operation example 1-3. As illustrated in Fig. 8, when the CORESET is duplicately allocated to the plurality of CCs, the UE 200 may assume the allocation of the following REG bundle.
· (Alt. 1): The REG bundles forming the CORESET are interleaved (non-continuous allocation to the frequency domain) between the CC#0 and the CC#1. In Fig. 8, REG bundle #1 and REG bundle #2 are interleaved.

In addition, in this case, the following operation may be executed.
· (Alt. 1-1): Notify the UE200 of enable/disable interleave using RRC parameters common to all CCs.
· (Alt. 1-2): Notify the UE 200 of the enable interleave using separate RRC parameters for each CC, when any or all of the parameters are set to "interleave".
· (Alt. 2): The REG bundles forming the CORESET cannot be interleaved between the CC#0 and the CC#1.

In this case, only localized mapping (contiguous allocation to the frequency domain) for the UE 200 may be supported.

Further, as illustrated in Fig. 8, the frequency diversity is high in the Alt. 1 and the simplicity of the allocation of the CORESET(RE) is high in the Alt.2.
· (Alt. 3): The REG bundles forming the CORESET are interleaved within each CC.

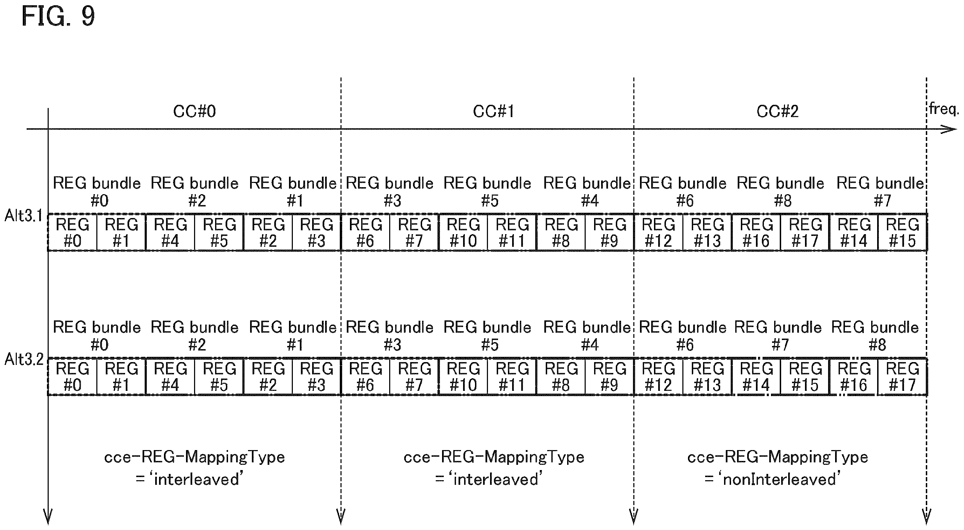

Fig. 9 illustrates an allocation example (2) of CORESET to a frequency domain and a time domain according to operation example 1-3. As illustrated in Fig. 9, when the REG bundles forming the CORESET are interleaved within each CC, the UE 200 may assume the allocation of the REG bundles as follows.
· (Alt. 3-1): Notify the UE200 of enable/disable interleave using RRC parameters common to all CCs.
· (Alt. 3-2): Notify the UE 200 of the enable interleave using separate RRC parameters for each CC, when the parameters are set to "interleave".

As illustrated in Fig. 9, in the CC#0 and the CC#1, the interleave is enable (cce-REG-MappingType
= 'interleaved'), but in the CC#2, the interleave is disable (cce-REG-MappingType
= 'nonInterleaved'). Therefore, in the case of the Alt. 3-2, in the CC#2, REG bundles #6 to #8 are allocated in the same order without being interleaved.

### (3.4) Operation Example 2

This operation example relates to a new CORESET configuration. Specifically, in this operation example, when the CORESET is dividedly transmitted via the plurality of CCs, the aggregation level (AL) of the control channel element (CCE) is set higher than the 3GPP Release-15 and 16. Also, in this operation example, in the case where the CORESET is dividedly transmitted via the plurality of CCs, the number of resource element groups (REGs) included in the CCE (which may be the number of REG bundles) is set to be more than that in a case where the CORESET is not dividedly transmitted.

Specifically, in the GPP Release-15 and 16, the AL of the CCE can be set to be 1, 2, 4, 8, and 16, but a larger value may be set, for example, 32, 64, and the like.

The UE 200 may assume such an AL when the CORESET is dividedly transmitted via the plurality of CCs.

For example, the following fields may be added to the parameter of the RRC layer, nrofCandidate.
· aggregationLevel32 ENUMERATED {n0, n1, n2, n3, n4, n5, n6, n8}

In particular, a high AL is suitable in the case of a multiplexing scheme (time division multiplexing (TDM), space division multiplexing (SDM)) other than FDM in which all bandwidths are allocated to a specific UE.

Moreover, when THE CORESET is dividedly transmitted via the plurality of CCs, the UE 200 may make the following assumption regarding the AL.
· (Alt. 1): Only one AL is set for the synchronization signal (SS).

In this case, the UE 200 may make the following assumptions.
· (Alt. 1-1): The AL to be set is predefined and fixed.

For example, the UE 200 may assume to monitor the PDCCH transmitted via the grouped CCs. In this case, the AL of the CCE may be assumed to be 16 (or another AL may be assumed).
· (Alt. 1-2): The AL is set by the parameter of the upper layer.

In this case, the complexity of blind decoding (BD) can be reduced, and the high AL is suitable for a multiplexing scheme other than the FDM in which all the bandwidths are allocated to a specific UE.
· (Alt. 2): No particular limitation.

The UE 200 may assume 1, 2, 4, 8, and 16 as the AL of the CCE, as in the 3GPP Release-15 and 16. Further, the UE 200 may assume the high AL when the high AL like 32 is supported.

Further, the CCE may be configured with more REGs than the 3GPP Release-15 and 16. In the 3GPP Release-15 and 16, the CCE can include 6 REG bundles, but may be configured with k·6 REGs when the high frequency band such as FR2x is used.

Here, "k" may be determined according to any of the following.
· (Alt. 1): The k is set by the parameter of the upper layer.

Specifically, k implements scaling for the RRC layer parameter, CCE-REG-MappingType.
· (Alt. 2): k is determined according to the BWP size.

Table 1 shows an example of k according to the BWP size.

**[Table 1]**

| Bandwidth Part Size | *k* |
|---|---|
| 1-275 | 1 |
| 275-x | 2 |
| x-y | 3 |

As shown in Table 1, the size of k may be increased as the BWP size is increased. That is, as the BWP size increases, the number of REG bundles (REG) included in the CCE may increase.

Further, the size of the REG bundle may be increased to 12 or the like. The large size of the REG bundle may be set by the parameter of the upper layer.

For example, reg-BundleSize may be set as follows.
· reg-BundleSize ENUMERATED {n2, n3, n6, n12}

### (3.5) Operation Example 3

This operation example relates to mutual cooperation between the CORESET and the search space. Specifically, in this operation example, when the CORESET is dividedly transmitted via the plurality of CCs, the relationship between the CORESET and the common search space (CSS) is changed.

In the 3GPP Release-15 and 16, the CORESET and the search space set are configured for each DL BWP. Assuming that the CORESET is scheduled across the plurality of CCs, and the configuration may be reviewed as follows.
· (Alt. 1): The parameters of the upper layer related to the CORESET and the search space are set for grouped CCs independently of the parameters for the existing CC.

In this case, the number of CORESETs for the grouped CCs may be expressed by "x". The x may be different from the existing parameter "P" (see chapter 10.1 in 3GPP TS 38.213) which indicates the number of CORESETs per cell. The index of the CORESET may be contiguous or may or not contiguous with P. In other words, the index of the CORESET for the grouped CC and the index of the CORESET per cell may be serial numbers or may be allocated other numbers.

In addition, the number of search spaces for the grouped CCs may be expressed by "y". The y may be different from the existing parameter "S" (see chapter 10.1 in 3GPP TS 38.213) which indicates the number of synchronization signals (SSs) per cell. The index of the search space may be contiguous or may not be contiguous with S. Furthermore, the SS may be associated with only the CORESET for the grouped CC.
· (Alt. 2): Similar to the 3GPP Release-15 and 16, the parameters of the upper layer related to the CORESET and the search space are set for each DL BWP.

In this case, it is desirable that the search space set associated with the CORESET scheduled across the plurality of CCs has the same parameter. The parameters (see chapter 10.1 in 3GPP TS38.213) may include a monitoring cycle, a monitoring offset, the number of PDCCH candidates, and a DCI format that can be monitored.

### (3.6) Operation Example 4

This operation example relates to the change in the PUSCH preparation time (and PDSCH decoding time). In the 3GPP Release-15 and 16, as the PDCCH processing time, 10, 12, 23, and 36 (µ = 0, 1, 2, 3) shown in Table 2 are defined as PUSCH preparation time N2 (PUSCH timing capability 1) indicating a timeline between the PDCCH and the PUSCH.

**[Table 2]**

| *µ* | **PUSCH preparation time *N₂* [symbols]** |
|---|---|
| 0 | 10 |
| 1 | 12 |
| 2 | 23 |
| 3 | 36 |
| n1 | m1 |

On the other hand, in this operation example, the PUSCH preparation time N2 may be changed when different frequency bands including a high frequency band such as FR2x are used. For example, "m1" (µ = n1) as shown in Table 2 may be added for the high frequency bands such as FR2x. A value exceeding 36, for example, 48 and the like may be set as m1.

Further, when a large SCS such as 240 kHz is used, a larger value may be set as the PUSCH preparation time N2.

Note that the PUSCH preparation time N2 (PUSCH timing capability 2) shown in Table 3 may not be supported in the case of the large SCS, as in the 3GPP Release-15 and 16. The PUSCH preparation time N2 (PUSCH timing capability 1, 2) is described in chapter 6.4 in 3GPP TS38.214.

**[Table 3]**

| *µ* | **PUSCH preparation time *N₂* [symbols]** |
|---|---|
| 0 | 5 |
| 1 | 5.5 |
| 2 | 11 for frequency range 1 |

Furthermore, the PUSCH preparation time N2 (PUSCH timing capability 2) may extend, and therefore the frequency band applied in the SCS of 60 kHz is not limited, and the SCS of 120 kHz may be supported using the PUSCH preparation time N2 larger than 11.

Further, the change in the PDCCH processing time as described above may be applied to the PDSCH decoding time. Specifically, when the different frequency bands including the high frequency band such as FR2x is used, the PDSCH decoding time N1 shown in Table 4 may be changed.

**[Table 4]**

| *µ* | **PDSCH decoding time *N₁* [symbols]** | |
|---|---|---|
| | ***dmrs-AdditionalPosition* = pos0 in *DMRS-DownlinkConfig* in both of *dmrs-DownlinkForPDSCH-MappingTypeA, dmrs-DownlinkForPDSCH-MappingTypeB*** | ***dmrs-AdditionalPosition* ≠ pos0 in *DMRS-DownlinkConfig* in either of *dmrs-DownlinkForPDSCH-MappingTypeA, dmrs-DownlinkForPDSCH-MappingTypeB or if the higher layer parameter is not configured*** |
| 0 | 8 | *N_{1,0}* |
| 1 | 10 | 13 |
| 2 | 17 | 20 |
| 3 | 20 | 24 |
| n2 | m2 | m3 |

For example, as the high frequency band such as FR2x, "m2" (dmrs-AdditionalPosition=pos0) and "m3" (dmrs-AdditionalPosition≠pos0) (µ=n2) as shown in Table 4 may be added. A value exceeding 20 may be set for the m2, and a value exceeding 24 may be set for the m3.

### (4) Action and Effect

According to the embodiment described above, the following effects can be obtained. Specifically, the UE 200 can assume the division transmission in which the first area of the CORESET is transmitted via the first component carrier (for example, CC #0, see Fig. 6 and the like) and the second area of the CORESET is transmitted via the second component carrier (for example, CC #1).

Therefore, in particular, when the available frequency band extends and more CCs are set, the UE 200 can assume more efficient configuration of the CORESET. As a result, the efficient transmission of the CORESET using the plurality of CCs may be realized.

In the present embodiment, the UE 200 may assume that the aggregation level (AL) of the control channel elements (CCE) constituting the CORESET is higher in the case of the division transmission of the CORESET than that in the case where the CORESET is not dividedly transmitted.

Further, in the present embodiment, the UE 200 may assume that the number of resource element groups (REG) included in the CCE (which may be the number of REG bundles) is larger in the case of CORESET division transmission than that in the case where the CORESET is not dividedly transmitted.

As a result, the efficient transmission of the CORESET using the plurality of CCs may be realized.

In the present embodiment, the UE 200 may assume that the parameters of the upper layer related to the CORESET or the common search space (CSS) are applied to the plurality of CC groups used for the division transmission. Therefore, the parameters can be collectively applied to the plurality of CCs included in the group, and the efficient configuration of the CORESET or the CSS may be realized.

In the present embodiment, the UE 200 can assume that the first area and the second area of the CORESET are allocated to different positions in the time domain while being dividedly transmitted into the plurality of CCs. As a result, the CORESET can be dividedly transmitted even in the time domain, and the transmission of more efficient CORESET using the plurality of CCs may be realized.

In the present embodiment, the UE 200 may assume a longer PUSCH preparation time in the case of the high frequency band such as FR2x, that is, different frequency bands different from the frequency band including one or the plurality of frequency ranges (FR1 and FR2) than that in the case of the frequency band.

Therefore, the UE 200 can assume an appropriate uplink data channel (PUSCH) preparation time even when using the high frequency band such as FR2x. As a result, even when using the different frequency band, UL communication via the PUSCH can be realized more reliably.

In the present embodiment, the UE 200 may assume the longer PUSCH preparation time in the case where the subcarrier spacing (SCS) used for the transmission of the PUSCH is larger than that in the case of the frequency band including the FR1 and the FR2 than that in the case of the frequency band. Therefore, the UE 200 can assume an appropriate preparation time according to the SCS even when using the different frequency band, and may more reliably realize the UL communication via the PUSCH.

In the present embodiment, the UE 200 may assume the longer PDSCH decoding time in the case of the different frequency bands than that in the case of the frequency band including the FR1 and the FR2. Therefore, the UE 200 can assume an appropriate PDSCH decoding time even when using the different frequency band, and may more reliably realize the DL communication via the PDSCH.

### (5) Other Embodiments

Although the embodiment has been described above, it is obvious to those skilled in the art that the embodiment is not limited to the description of the embodiment and various modifications and improvements can be made.

For example, in the embodiment described above, the use of the high frequency band such as FR2x is assumed, but at least one of the operation examples described above may be applied to another frequency range, for example, a frequency band between the FR1 and the FR2.

Furthermore, the FR2x may be divided into a frequency range of 70 GHz or less and a frequency range of 70 GHz or higher, and any of the operation examples described above for the frequency range of 70 GHz or higher and the frequency range of 70 GHz or less is partially be applied.

In addition, the configuration diagram (Fig. 4) used for explaining the above-described embodiment illustrates blocks of functional unit. Those functional blocks (structural components) can be realized by a desired combination of at least one of hardware and software. A method for realizing each functional block is not particularly limited. That is, each functional block may be realized by one device combined physically or logically. Alternatively, two or more devices separated physically or logically may be directly or indirectly connected (for example, in a wired or wireless manner) to each other, and each functional block may be realized by these plural devices. The functional blocks may be realized by combining software with the one device or the plural devices mentioned above.

Functions include determining, deciding, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting may be called a transmitting unit or a transmitter. For any of the above, as explained above, the realization method is not particularly limited to any one method.

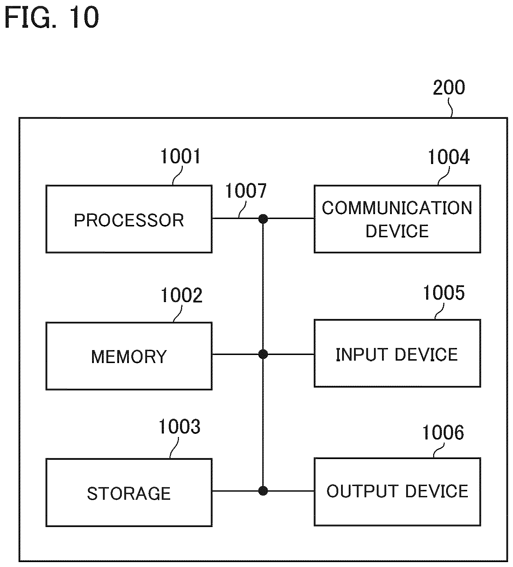

Furthermore, the UE 200 explained above can function as a computer that performs the processing of the radio communication method of the present disclosure. Fig. 10 is a diagram illustrating an example of a hardware configuration of the UE 200. As illustrated in Fig. 10, the UE 200 can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices illustrated in the figure, or can be constituted without including a part of the devices.

Each functional block (see Fig. 4) of the UE 200 can be realized by any of hardware elements of the computer device or a combination of the hardware elements.

In addition, each function of the UE 200 is realized by causing the processor 1001 to perform computing by loading predetermined software (computer program) on the hardware such as the processor 1001 and the memory 1002, controlling communication via the communication device 1004, and controlling at least one of reading and writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (computer program code), a software module, data, and the like from the storage 1003 and/or the communication device 1004 into the memory 1002, and executes various processes according to these. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main storage device), and the like. The memory 1002 can store therein a computer program (computer program codes), software modules, and the like that can execute the method according to the embodiment of the present disclosure.

The storage 1003 is a computer readable recording medium. Examples of the storage 1003 may include at least one of an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD) .

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device is configured to include hardware such as a microprocessor, a digital signal processor (DSP), an application specific integrated circuit (ASIC), a programmable logic device (PLD), and a field programmable gate array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, broadcasting information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, it is obvious that the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from an upper layer (or lower layer) to a lower layer (or upper layer). It may be input and output via a plurality of network nodes.

The input/output information can be stored in a specific location (for example, a memory) or can be managed with a management table. The information to be input/output can be overwritten, updated, or added. The information can be eliminated after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, computer program code, computer program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (remote radio head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows communication between a base station and a mobile station to be replaced with communication between a plurality of mobile stations (for example, may be referred to as device-to-device (D2D), vehicle-to-everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The radio frame may be composed of one or a plurality of frames in the time domain. One frame or each of the plurality of frames in the time domain may be referred to as a subframe. The subframe may be composed of one or a plurality of slots in the time domain. The subframe may also be a fixed time length (for example, 1 ms) that does not depend on numerology.

The numerology may be a communication parameter applied to at least one of transmission and reception of a certain signal or channel. The numerology may indicate at least one of, for example, subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, specific windowing processing performed by a transceiver in a time domain, and the like.

The slot may be composed of one or a plurality of symbols (orthogonal frequency division multiplexing (OFDM)) symbols, single carrier frequency division multiple access (SC-FDMA) symbol, and the like in the time domain. The slot may be a time unit based on numerology.

The slot may include a plurality of minislots. Each minislot may be composed of one or a plurality of symbols in the time domain. In addition, the minislot may be referred to as a sub-slot. The minislot may be configured with a smaller number of symbols than that of the slot. A PDSCH (or PUSCH) transmitted in a time unit larger than a minislot may be referred to as a PDSCH (or PUSCH) mapping type A. A PDSCH (or PUSCH) transmitted using a minislot may be referred to as a PDSCH (or PUSCH) mapping type B.

All of the radio frame, the subframe, the slot, the minislot, and the symbol represent time units at the time of transmitting a signal. The radio frame, the subframe, the slot, the minislot, and the symbol may have different names corresponding thereto, respectively.

For example, one subframe may be referred to as a transmission time interval (TTI), a plurality of consecutive subframes may be referred to as TTI, and one slot or one minislot may be referred to as TTI. That is, at least one of the subframe and the TTI may be a subframe (1 ms) in the existing LTE, a period (for example, 1 to 13 symbols) shorter than 1 ms, or a period longer than 1 ms. Note that a unit representing TTI may be called a slot, a minislot, or the like instead of a subframe.

Here, the TTI refers to, for example, a minimum time unit of scheduling in radio communication. For example, in the LTE system, the base station performs scheduling to allocate radio resources (frequency bandwidth, transmission power, and the like that can be used in each user terminal) to each user terminal in units of TTI. Note that the definition of the TTI is not limited thereto.

The TTI may be a transmission time unit such as a channel-encoded data packet (transport block), a code block, and a code word, or may also be a processing unit such as scheduling or link adaptation. Note that when the TTI is given, a time interval (for example, the number of symbols) in which the transport block, the code block, the code word, and the like are actually mapped may be shorter than the TTI.

Note that when one slot or one minislot is referred to as the TTI, one or more TTIs (that is, one or more slots or one or more minislots) may be the minimum time unit of the scheduling. Further, the number of slots (the number of minislots) constituting the minimum time unit of the scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, or the like. A TTI shorter than the normal TTI may be referred to as a shortened TTI, a short TTI, a partial TTI (partial or fractional TTI), a shortened subframe, a short subframe, a minislot, a subslot, a slot, and the like.

Note that the long TTI (for example, normal TTI, subframe, and the like) may be read as a TTI having a time length exceeding 1 ms, and the short TTI (for example, a shortened TTI) may be read as a TTI that is less than the long TTI and has a TTI length of 1 ms or more.

The resource block (RB) is a resource allocation unit in the time domain and the frequency domain, and may include one or a plurality of consecutive subcarriers in the frequency domain. The number of subcarriers included in the RB may be the same regardless of the numerology, for example, 12. The number of subcarriers included in the RB may be determined based on the numerology.

Further, the time domain of the RB may include one or a plurality of symbols, and may have a length of 1 slot, 1 minislot, 1 subframe, or 1 TTI. 1 TTI, one subframe, and the like may be composed of one or a plurality of resource blocks.

Note that one or a plurality of RBs may be referred to as a physical resource block (physical RB: PRB), a subcarrier group (SCG), a resource element group (REG), a PRB pair, an RB pair, and the like.

In addition, the resource block may be composed of one or a plurality of resource elements (RE). For example, 1 RE may be a radio resource region of one subcarrier and one symbol.

A bandwidth part (BWP) (may be called a partial bandwidth, and the like) may represent a subset of consecutive common resource blocks (RBs) for certain numerology in a certain carrier. Here, the common RB may be specified by an RB index based on a common reference point of the carrier. The PRB may be defined in a certain BWP and numbered within the BWP.

The BWP may include a BWP for UL (UL BWP) and a BWP for DL (DL BWP). One or a plurality of BWPs may be configured in one carrier for the UE.

At least one of the configured BWPs may be active, and it may not be assumed that the UE transmits and receives a predetermined signal/channel outside the active BWP. Note that "cell", "carrier", and the like in this disclosure may be read as "BWP".

The structures of the radio frame, the subframe, the slot, the minislot, the symbol, and the like, described above are merely examples. For example, the configurations of the number of subframes included in a radio frame, the number of slots per subframe or radio frame, the number of minislots included in the slot, the number of symbols and RBs included in the slot or minislot, the number of subcarriers included in the RB, the number of symbols in the TTI, the symbol length, the cyclic prefix (CP) length, and the like can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the above devices may be replaced with a "unit", a "circuit" a, "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in this disclosure, these articles shall include plurality of nouns following these articles.

The term "determining" and "deciding" used in the present disclosure may include a wide variety of motions. The "determining" and "deciding" may include, for example, judging, calculating, computing, processing, deriving, investigating, looking up (search, inquiry) (for example, searching in a table, a database or another data structure), and may include ones regarding ascertaining as the "determining" and "deciding". In addition, the "determining" and "deciding" may include one regarding "receiving" (for example, receiving information), transmitting (for example, transmitting information), an input, an output, accessing (for example, accessing data in memory) as "determining" and "deciding". In addition, the "determining" and "deciding" may include ones regarding ones such as resolving, selecting, choosing, establishing, and comparing as "determining" and "deciding". That is, the "determining" and "deciding" can include considering some operation as performing the "determining" and "deciding". In addition, the "determining (deciding)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10: Radio communication system
- 20: NG-RAN
- 100A, 100B: gNB
- UE: 200
- 210: Radio signal transmitting and receiving unit
- 220: Amplifier unit
- 230: Modulation and demodulation unit
- 240: Control signal and reference signal processing unit
- 250: Encoding/decoding unit
- 260: Data transmitting and receiving unit
- 270: Control unit
- BM: Beam
- 1001: Processor
- 1002: Memory
- 1003: Storage
- 1004: Communication device
- 1005: Input device
- 1006: Output device
- 1007: Bus

## Claims

1. A terminal, comprising:
a receiving unit that receives a downlink control channel from a network;
a transmitting unit that receives the downlink control channel and then transmits an uplink data channel to the network based on a preparation time; and
a control unit that assumes a longer preparation time in a case of different frequency bands different from a frequency band including one or a plurality of frequency ranges than a preparation time in a case of the frequency band.

2. The terminal according to claim 1, wherein the control unit assumes a longer preparation time than a preparation time in the case of the frequency band when a subcarrier spacing used for transmission of the uplink data channel is larger than a subcarrier spacing in the case of the frequency band.

3. A terminal according to claim 1 or 2, wherein
the receiving unit receives a downlink data channel from the network, and
the control unit assumes a longer decoding time of the downlink data channel in the case of the different frequency bands than a decoding time in the case of the high frequency band.
